**Europäisches Patentamt**

**European Patent Office**

**Office européen des brevets**

(19)

(11) Veröffentlichungsnummer: **0 639 445 A2**

## (12) EUROPÄISCHE PATENTANMELDUNG

(21) Anmeldenummer: **94111851.5**

(22) Anmeldetag: **29.07.94**

(51) Int. Cl.[6]: **B29C 47/76**

(30) Priorität: **20.08.93 DE 4328013**

(43) Veröffentlichungstag der Anmeldung:
**22.02.95 Patentblatt 95/08**

(84) Benannte Vertragsstaaten:
**BE CH DE FR GB IT LI NL**

(71) Anmelder: **Fried. Krupp AG Hoesch-Krupp
Altendorfer Strasse 103
D-45143 Essen (DE)**

(72) Erfinder: **Ben-Nasr, Hedi, Dr.rer.nat.
Friedhofstrasse 32
D-45892 Gelsenkirchen (DE)**
Erfinder: **Grabow, Manfred
Steinhauser Strasse 8
D-40882 Ratingen (DE)**
Erfinder: **Reimann, Klaus
Ernst-Tengelmann-Ring 1c
D-45259 Essen (DE)**

(54) **Verfahren zum Trennen eines aus mehreren Komponenten bestehenden Stoffgemisches in einem Extruder.**

(57) Die Erfindung befaßt sich mit der Trennung eines Stoffgemisches aus thermoplastischen Polymeren, die abzutrennende niedermolekulare Verbindungen enthalten, durch Lösungsmittelextraktion und Thermovakuumbehandlung einer Schmelze des Stoffgemisches in einem Extruder mit mehreren Hochdruckzonen H1 bis H4 und Niederdruckzonen N1 bis N3 und mit einem Trennmedium mit Lösungsmittelcharakter, insbesondere mit Wasser, wobei in den vorderen Lösungsmittelextraktionszonen, den Niederdruckzonen N1 und N2 mit einem Restdruck (p) der Bedingung $1 \text{ bar} \leq p \leq p_c$ gefahren wird und die Thermovakuumbehandlung der Schmelze erst anschließend in der letzten Niederdruckzone N3 durchgeführt wird. Das Verfahren läßt sich vorteilhaft zur Trennung eines Stoffgemisches mit der Hauptkomponente Polyamid-6 und der Nebenkomponente $\epsilon$-Caprolactam anwenden.

FIG.3

EP 0 639 445 A2

Verfahren zum Trennen eines aus mehreren Komponenten bestehenden Stoffgemisches in einem Extruder.

Die Erfindung betrifft ein Verfahren zur Trennung eines aus mehreren Komponenten bestehenden Stoffgemisches, das als Hauptkomponente thermoplastische Polymere und als abzutrennende Nebenkomponenten niedermolekulare Verbindungen enthält, durch Thermovakuumbehandlung einer Schmelze des Stoffgemisches in einem Extruder mit mehreren Hoch- und Niederdruckzonen, wobei in eine der der letzten Niederdruckzone vorgeschalteten Hochdruckzonen unter dem Einleitungsdruck ($p_e$) ein Trennmedium, in dem die niedermolekulare Verbindung zumindest teilweise lösbar ist, in die Schmelze eingeleitet und zumindest zum Teil aus einer dieser Hochdruckzone benachbarten Niederdruckzone, in der ein gegenüber dem Einleitungsdruck ($p_e$) geringerer Restdruck ($p$) herrscht, als mit Nebenkomponenten beladenes Trennmedium abgeführt und außerhalb des Extruders aufgefangen wird.

Ein solches Verfahren ist durch die DE 39 32 793 A 1 zur Behandlung einer Polyamid-6-Schmelze mit Wasserdampf bekannt, wobei auch darauf hingewiesen wird, daß beim Einsatz von gesättigtem Wasserdampf bei einer an sich zu vermeidenden falschen Einstellung der Druckverteilungen im Extruder der Dampf aus dem Extruder in der der Schmelzebewegung entgegengesetzten Richtung austreten kann. Die in DE 39 32 793 A 1 abgehandelte Erfindung betrifft allerdings die mehrmalige Behandlung von Polycaproamidschmelzen und ihrer Copolymere im Extruder mit überhitztem Wasserdampf und Thermovakuumentgasung zur Abtrennung von niedermolekularen Verbindungen.

Wenn auch die Menge des in die Polymerschmelze vor jeder Vakuumentgasungszone einzuleitenden Wassers auf 150 % bezogen auf die Menge an ursprünglich in der Ausgangsschmelze enthaltenen niedermolekularen Verbindungen begrenzt ist, so stellt die wieder abzuführende, dann beladene Wassermenge doch erhebliche Anforderung an die Kapazität der Vakuumanlage, die in allen Niederdruckzonen zu Abtrennung des beladenen Wassers ein Vakuum kontinuierlich aufrechterhalten soll, um schließlich einen Restgehalt an niedermolekularen Verbindungen von höchstens 1,8 % zu erreichen.

Entgegen der in der DE 39 32 793 A 1 auch niedergelegten Fachmeinung, bei der Polyamid-6 Reinigung mit gesättigtem Wasserdampf einen Rückwärtsfluß sich nicht einstellen zu lassen, schlägt US-PS 3,799,234 für die Trennbehandlung von Kunststoffen das Gegenströmen des Trennmediums, das in bestimmten Fällen Wasserdampf sein kann, ausdrücklich vor. Als eine Alternative zur Unterstützung der Ableitung des beladenen Trennmediums ist auch die Vakuumbehandlung vorgesehen. Allerdings läßt die Bedingung, daß das Gas inert sein muß und aus der Vielzahl inerter Gase das jeweils Geeignete auszuwählen ist, nicht erkennen, ob nach US 3,799,234 auch eine Thermovakuumbehandlung von Polymeren, wie von Polykondensaten gemeint sein kann.

Kann aus den beiden vorstehend genannten Schriften die Betriebsweise einer Thermobehandlung zum Abtrennen von niedermolekularen Verbindungen aus thermoplastischen Polymeren im Extruder mit einem Unterdruck als Restdruck oder alternativ mit athmosphärischem Auslaß als Druckobergrenze entnommen werden, so ist dieser athmosphärische Auslaß Untergrenze bei einem durch die US-PS 3,683,511 bekannten artfremden Gleichstrom-Verfahren, bei dem Restdrücke bis 10 bar vorgesehen sind, um leicht flüchtige Kohlenwasserstoffe aus Elastomeren auszutreiben.

Schließlich werden in der eingangs genannten DE 39 32 793 A 1 noch andere Verfahren zur Thermovakuumbehandlung von Polymerschmelzen in einem Extruder abgehandelt, wie beispielsweise das bereits erwähnte Einleiten von gesättigtem Wasserdampf.

Die verschiedensten Verfahren sind mit dem Ziel entwickelt worden, Polymerschmelzen durch Entfernung unerwünschter Komponenten zu reinigen und somit die geforderten Qualitäten zu erreichen. Als wichtigstes Verfahren hat sich das Entgasen unter Vakuum mit oder ohne Schleppmitteleinsatz in der Praxis durchgesetzt.

Der Erfindung liegt nun die Aufgabe zugrunde, das bekannte kontinuierliche Verfahren weiterzuentwickeln und ein betriebssicheres und wirtschaftliches Verfahren zur Abtrennung von niedermolekularen Verbindungen aus Polymerschmelzen, insbesondere zur Entlactamisierung von Polyamid-6, zu schaffen, das mit relativ geringem Energieaufwand zu geringen Restgehalten an niedermolekularen Verbindungen, also zu einer weitreichenden Reinigung der Polymerschmelze führt.

Ein weiteres Anliegen ist die Schaffung eines flexiblen Verfahrens, bei dem als Ausgangsmaterial ein thermoplastisches Polymer in fester Form (Granulat, Schnitzel, Pulver...), in geschmolzenem Zustand, z.B. aus einem Polyadditionsreaktor, oder in Form einer Polymerlösung oder Polymerpaste eingesetzt werden kann, und das sich mit weiteren Verarbeitungsschritten, wie Zumischen von Additiven, Granulieren oder einer anschließenden Weiterverarbeitung, z.B. zu Spinnfasern, vorteilhaft kombinieren läßt.

Erfindungsgemäß wird daher vorgeschlagen, daß die Schmelze auf ihrem Weg durch den Extruder zunächst eine Niederdruckzone mit einem Restdruck ($p$) durchläuft, der der Bedingung

$$1 \text{ bar} \leq p \leq p_c$$

(wobei $p_c$ der kritische Druck des Trennmediums ist) genügt, und aus der mit Nebenkomponenten beladenes Trennmedium abgeführt wird, bevor die Thermovakuumbehandlung der Schmelze durch Vakuumentgasen bei einem Unterdruck ($p_u$) < 0,5 bar, vorzugsweise < 0,05 bar in der letzten Niederdruckzone erfolgt.

Die erfindungsgemäße Kombination einer Lösungsmittelextraktion im Extruder bei einem Restdruck p von mindestens 1 bar und darüber mit einem anschließenden Vakuumentgasen führt dazu, daß zunächst große Mengen an niedermolekularen Verbindungen mit geringem Energieaufwand aus dem Stoffgemisch entfernt werden können und das energieaufwendige Vakuum nur noch zum Austragen von Resten an niedermolekularen Verbindungen und kleinen Restmengen an Trennmittel aufrechterhalten werden muß. Der Verfahrensabschnitt der Thermovakuumbehandlung ist somit bezüglich seines Energieaufwandes weitgehend unabhängig vom ursprünglichen Gehalt des Stoffgemisches an niedermolekularen Verbindungen und unabhängig davon, ob eine relativ, aber auch absolut große oder sehr große Menge an Trennmittel vorher eingeleitet und bei $\geq 1$ bar wieder abgeleitet worden ist. Die Thermovakuumbehandlung, praktisch auf eine Schlußentgasung beschränkt, wird damit besonders wirkungsvoll.

Auf Ausgestaltungen des erfindungsgemäßen Verfahrens entsprechend der Unteransprüche wird verwiesen.

Bevorzugt wird eine grundsätzliche Verfahrensvariante, bei der der überwiegende Teil des in eine Hochdruckzone eingeleiteten, dort mit Nebenkomponenten beladenen Trennmediums gegenströmend geführt und aus der dieser Hochdruckzone vorgeschalteten Niederdruckextraktionszone abgeführt wird.

Weiterhin wird vorgeschlagen, daß die Thermovakuumbehandlung erst durchgeführt werden soll, nachdem der Gehalt an niedermolekularen Verbindungen auf $\leq 10\ \%$ des Ausgangsgehaltes des Stoffgemisches an niedermolekularen Verbindungen abgesenkt worden ist.

Im übrigen soll die Einleitung des Trennmediums unter einem Druck $p_e$ erfolgen, der über dem Restdruck p der zugeordneten Niederdruckextraktionszone liegt, aber den kritischen Druck $p_c$ des Trennmediums nicht übersteigen soll.

Vorwiegend für die Zone mit überwiegender Rückwärtsströmung des beladenen Trennmediums gilt als vorteilhafter Verfahrensparameter ein Restdruck (p) zwischen 1 und 8 bar und die Einleitung des Trennmediums unter einem Druck ($p_e$), der in dem durch die Funktion $p < p_e < p_c$ gegebenen Bereich liegt. Hierin steckt auch die überraschende Erkenntnis, daß mit relativ geringen Differenzdrükken hervorragende Reinigungseffekte erzielt werden können.

Die Trennbehandlung des Stoffgemisches erfolgt nach einer bevorzugten Ausführungsform der Erfindung nach einem Verfahren, bei dem die Schmelze zwei Hochdruckzonen durchläuft, in denen Trennmedium unter Druck eingeleitet wird, derart, daß beide Hochdruckzonen dem Zonenbereich mit Rückwärtsströmung zugeordnet werden, daß vor beiden Hochdruckzonen eine Niederdruckzone, in der der definierte Restdruck (p) herrscht, liegt, und daß aus beiden Niederdruckzonen beladenes Trennmittel abgeleitet wird.

Grundsätzlich ist es vorteilhaft, wenn die an die Lösungsmittelextraktion unmittelbar anschließende Ableitung des beladenen Trennmediums aus den vorderen Niederdruckzonen bei einem Förderdruck ($p_f$) erfolgt, der der Bedingung für den Restdruck (p) genügt.

Trennmedium kann in vielen Fällen Wasser sein oder andere, bei Normalbedingungen (1 bar absolut und 20 °C) flüssige Medien, wie beispielsweise Alkohole. In Sonderfällen wird als Trennmedium gasförmiges $CO_2$ oder $N_2$ verwendet, das als verdichtetes Gas in die Schmelze eingeleitet ist. Dabei ist das Gas (im thermodynamischen Sinne) Lösungsmittel für die niedermolekulare Verbindung, sodaß auch bei Verwendung solcher Gase von einer Art Lösungsmittelextraktion, einem selektiven Entfernen bestimmter Substanzen, gesprochen werden kann.

Auch ein Gemisch aus einem bei 20 °C und 1 bar abs. flüssigen Trennmittel bzw. Lösungsmittel und aus $CO_2$ oder $N_2$ kommt zur Anwendung.

Bei dem erfindungsgemäßen Trenn- bzw. Reinigungsverfahren kann das (unter Normalbedingungen) flüssige Lösungsmittel auch in Dampfform eingeleitet werden. Beim gasförmigen Lösungsmittel kann ein höheres Lösungsvermögen verdichteter Gase zugunsten einer besseren Reinigungswirkung ausgenutzt werden.

Die Vorteile der Erfindung kommen also grundsätzlich bei der Behandlung von Stoffgemischen zum Tragen, die als Hauptkomponente thermoplastische Polymere enthalten, wobei die Nebenkomponenten auch als Verunreinigungen oder Nebenprodukte eines Prozesses bezeichnet werden können. Solche Verunreinigungen sind zum Beispiel Lösungsmittelreste, etwa aus dem Polymerisationsprozeß, Monomere, Oligomere, Katalysatorreste, Nebenprodukte, zum Beispiel aus der Polyreaktion, Abbauprodukte oder andere Stoffe wie Geruchs- und/ oder Geschmackstoffe, Additive oder während des Gebrauchs eindiffundierte Fremdsubstanzen, die die Eigenschaften des Polymeren beeinträchtigen und/oder dessen Einsatz einschränken.

Nebenkomponenten im Sinne dieser Erfindung können auch Wertstoffe darstellen, die zurückgewonnen werden. So wird zum Beispiel bei der Reinigung von Rohpolyamid-6, das einen Monomergehalt von 8 bis 10 Gew.% aufweist, das extrahierte $\epsilon$-Caprolactam wiedergewonnen und kann nach entsprechender Aufbereitung zur Herstellung von Polyamid-6 (Polycaprolactam) eingesetzt werden.

So wird nun auf vorteilhafte Anwendung des Verfahrens gemäß den hierauf gerichteten weiteren Unteransprüchen verwiesen, nämlich einmal auf die Anwendung des Verfahrens zur Abtrennung niedermolekularer Verbindungen im Zuge der Aufbereitung von RecyclatKunststoff und Recyclat-Kunststoffgemischen, zum anderen auf die Anwendung des Verfahrens zur Thermovakuumbehandlung eines Rohkunststoffes. Rohkunststoff und/oder das Recyclat können ein Gemisch mit der Hauptkomponente Polyamid-6 und der Nebenkomponente $\epsilon$-Caprolactam sein.

Das Verfahren mit Wasser als Trennmedium, das als Wasserdampf in die Schmelze eingeleitet wird, wird mit der Maßgabe betrieben, daß mindestens 200 % Wasser, bezogen auf den anfänglichen Massegehalt des Stoffgemisches an niedermolekularen Verbindungen, wie an beispielsweise $\epsilon$-Caprolactam, eingeleitet werden.

Bei der Anwendung des Verfahrens zum Trennen von Rohkunststoffen oder Recyclaten, insbesondere zum Abtrennen von $\epsilon$-Caprolactam in mehreren Stufen wird in die erste Hochdruckzone mehr als 50 Masse %, in die der abschließenden Thermovakuumbehandlung näher liegende zweite Hochdruckzone weniger als 50 Masse % des Wassers eingeleitet werden, und es ist vorgesehen, daß der Restdruck ($p_1$) in der der ersten Hochdruckzone vorgeschalteten Niederdruckzone höher ist als der Restdruck ($p_2$) in der zweiten Niederdruckzone, und daß die Differenz ($p_2$ - $p_1$) der Restdrücke mindestens 1 bar beträgt.

Polyamid 6 wird großtechnisch aus $\epsilon$-Caprolactam, vorwiegend durch hydrolytische Polymerisation gewonnen. Dabei stellt sich ein thermodynamisches Gleichgewicht zwischen das Polykondensat Polyamid-6 (PA 6), das Monomer $\epsilon$-Caprolactam und verschiedene, vorwiegend cyclische Dimere und Oligomere ein, das im wesentlichen von der Temperatur und Wassergehalt abhängt. Dieses Gemisch mit ca. 8 bis 10 % Monomergehalt ($\epsilon$-Caprolactam) muß auf einen möglichst niederen Caprolactamgehalt entmonomerisiert werden. Hierzu werden alternativ regelmäßig zwei Methoden praktiziert, nämlich das Vakuumentgasen der leichtflüchtigen Bestandteile aus der Polymerschmelze (z.B. US 3,578,640) oder das erfindungsferne Extrahieren der niedermolekularen Verbindungen aus PA 6-Granulat mit heißem Wasser unter leichtem Überdruck.

Für die $\epsilon$-Caprolactamabscheidung sind beide Methoden nicht nur zeitaufwendig und kostenintensiv, sondern weisen auch zum Teil erhebliche technische und/oder Umweltprobleme auf. So wird z.B. beim Extrahieren des PA 6-Granulats mit heißem Wasser ca. die 10fache Menge an Wasser benötigt und das extrahierte $\epsilon$-Caprolactam muß aus einer sehr verdünnten wässrigen Lösung zurückgewonnen werden. Außerdem muß das feuchte Granulat (ca. 30 Gew.% Wasser) unter hohem Energieeinsatz getrocknet werden (Restfeuchtegehalt ca. 0,1 %). Weiterhin ist ein Wiederaufschmelzen des Granulats zum Mischen von Additiven und/oder zur Weiterverarbeitung erforderlich. Neben dem zusätzlichen Energieaufwand muß auch die Rückreaktion zu Monomeren und Oligomeren in Kauf genommen werden.

Beim Vakuumentgasen der Polymerschmelze dagegen wird, wie eingangs bereits hervorgehoben, ein kontinuierliches Vakuum von regelmäßig unter 10 mbar benötigt, was teure große Vakuumpumpen und hohen Energieaufwand erfordert. Zudem neigt das entgaste $\epsilon$-Caprolactam dazu, auf den Wänden der Rohrleitungen zur Vakuumeinheit zu kondensieren. Ein störungsfreier, kontinuierlicher Betrieb ist nur unter erheblichem Aufwand, z.B. beheizte Rohrleitungen und aufwendige Abscheidevorrichtungen, möglich.

Ein besserer oder zumindest ein vergleichbarer Reinigungsgrad kann nach dem erfindungsgemäßen Verfahren mit erheblich weniger Zeit- und Kostenaufwand als nach dem Stand der Technik erzielt werden. So läßt sich z.B. ein Rohpolyamid-6, das 8 bis 10 Gew.% $\epsilon$-Caprolactam enthält, erfindungsgemäß unter Einsatz von vergleichsweise (im Vergleich zum großtechnisch angewandten, erfindungsfernen Extrahieren bzw. Auswaschen mit heißem Wasser) sehr geringen Wassermengen, typischerweise bis 50 Gew.% der zu reinigenden PA 6-Menge, auf weit unter 0,1 Gew.% $\epsilon$-Caprolactam bei einfacher, betriebssicherer kontinuierlicher Fahrweise entlactamisieren. Das Caprolactam wird dabei aus der Polymerschmelze mit Wasserdampf bei einem Druck, der über dem atmosphärischen Druck liegt, vorzugsweise bei Gegenströmung des Trennmediums extrahiert und aus dem Extruder gemeinsam mit dem Wasserdampf und geringen Mengen an weiteren extrahierbaren Bestandteilen abgeführt. Durch Entspannen auf Normaldruck und Abkühlung wird der Wasserdampf verflüssigt. Das Caprolactam bleibt dabei stets in der wässrigen Phase gelöst und führt nicht zur Verstopfung der Rohrleitungen. Auch die Rückgewinnung des Caprolactams ist hier wesentlich wirtschaftlicher, da es aufgrund der geringeren Wassermengen in konzentrierter Form anfällt und zudem aufgrund der sehr kurzen Extraktionszeit im Extruder fast nur Caprolactam in die Extraktphase geht. Obwohl das Polyamid-6 als ein Polykondensat gegen Wasser nicht indifferent ist, wurde überraschenderweise festgestellt, daß trotz des erhöhten Wasserdampfdrucks über der Polymerschmelze bei den hohen Temperaturen von typischer Weise über 250 °C bei der erfindungsgemäßen Verfahrensweise kein Abbau des Polyamids und praktisch keine Rückbildung zu Caprolactam stattfinden. Dies ist offensichtlich auf die sehr kurze Wirkungszeit im Extruder von typischerweise 1 bis 5 Minuten zurückzuführen. Es ist auch als überraschend anzusehen, daß trotz dieser kurzen Kontaktzeit zwischen Polymerschmelze und Wasserdampf im Extruder eine so hohe Austragsrate des Caprolactams und eine so intensive Reinigung der Polymerschmelze erzielt werden. Hierzu tragen verschiedene Effekte bei, die sich nach dem vorliegenden Verfahren in vorteilhafter Weise ergänzen bzw. verstärken. So löst sich z.B. das Wasser aufgrund des erhöhten Drucks teilweise in der Polymerschmelze, wodurch eine bessere Diffusion und eine höhere Stoffaustauschrate ergeben. Der mit den extrahierten Stoffen beladene Wasserdampf wird dem Extruder unter Druck entzogen. Im Vergleich zu einer konventionellen Vakuumentgasung mit Wasserdampf als Schleppmittel kann damit nach der vorliegenden Erfindung wesentlich mehr Wasser eingesetzt und trotzdem die Strömungsgeschwindigkeit der Dampfphase im Extruder kleiner gehalten werden. Der Extraktionsdruck im Extruder kann allerdings nicht beliebig erhöht werden, weil bei hohen Drükken, insbesondere ≥ dem kritischen Druck (des Lösungsmittels) die Löslichkeit des Lösungsmittels in der Polymerschmelze sehr stark zunimmt und sich nachteilig auf die Prozeßführung auswirkt. Beim Wasser als Extraktionsmittel haben sich z.B. Drücke zwischen 1 bar abs. und ca. 20 bar abs. als günstig erwiesen. Als Extruder ist ein Gleichdrall-Zweischnecken-Kneter besonders geeignet, der nach dem Baukastenprinzip aufgebaut ist und somit hohe Flexibilität aufweist.

Der Gegenstand der Erfindung wird anhand von schematischen Abbildungen weiter näher erläutert. Von diesen zeigt

**Fig. 1** einen Extruder mit einstufiger Trennmitteleinleitung

**Fig. 2** einen Extruder mit zweistufiger Trennmitteleinleitung

**Fig. 3** anhand eines Diagramms des Druckverlaufs im Extruder eine Lösungsmittelextraktion mit Rückwärtsfluß,

**Fig. 4** anhand eines weiteren Diagrammes die Kombination Rückwärts- und Vorwärtsfluß,

**Fig. 5** anhand eines weiteren Diagramms die Vorwärtsextraktion

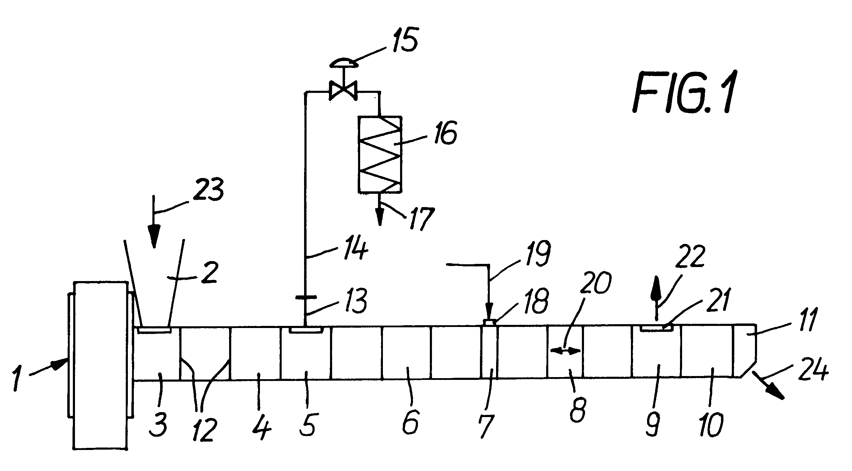

Fig. 1 zeigt einen Extruder 1 mit einem Aufgabetrichter 2, einer Einzugszone 3, die üblicherweise gekühlt ist, und einer Plastifizierzone 4 zum Aufschmelzen des Stoffgemisches. Der Plastifizierzone 4 folgt eine Niederdruckzone 5, die über eine Extraktionszone 6 in eine Hochdruckzone 7 übergeht, der eine Drosselvorrichtung 8 zugeordnet ist.

Der Drosselvorrichtung 8 folgt eine letzte Niederdruckzone 9 und am Ende eine letzte Hochdruckzone 10, die dem Extruderkopf 11 zugeordnet ist.

Mit Strichen 12 ist der Aufbau des Extruders 1, nämlich seines Schneckengehäuses im Baukastensystem angedeutet. Die Druckverteilung im Extruder selbst wird im wesentlichen durch die Geometrie der Schnecke, bzw. der Schnecken bestimmt.

Weiterhin zeigt Fig. 1 einen Auslaßstutzen 13 an der Niederdruckzone 5, der über eine Leitung 14, ein Regelventil 15 mit einem Wärmeaustauscher 16 verbunden ist, der einen Ablauf 17 aufweist. Die Hochdruckzone 7 hat einen Einlaßstutzen 18, in den eine Wasserdampfförderleitung 19 mündet.

Ein Doppelpfeil 20 soll die Verstellbarkeit des Drosselorgans 8 veranschaulichen.

Die letzte Niederdruckzone 9 weist eine Entgasungsöffnung 21, die an eine nicht dargestellte Vakuumanlage angeschlossen ist, auf. Ein Pfeilsymbol 22 deutet die Vakuumentgasung an.

Das Stoffgemisch, symbolisiert durch einen Pfeil 23, wird dem Aufgabetrichter 2 zugeführt, am Extruderkopf 11 tritt die gereinigte Hauptkomponente 24 aus.

Bei der Durchführung des Verfahrens gemäß dem in Fig. 1 erkennbaren Schema wird das Stoffgemisch 1, nämlich das thermoplastische Polymer dem Extruder 1 zugeführt. Der Einzugszone 3, die üblicherweise gekühlt wird, folgt das Aufschmelzen des Stoffgemisches in der Plastifizierzone 4. In der Extraktionszone 6 werden die Nebenkomponenten, bzw. Verunreinigungen aus der Polymerschmelze mittels eines Lösungsmittels, zum Beispiel Wasser, extrahiert. Hierzu wird Wasserdampf aus der Wasserdampfförderleitung 19 über die Einlaßstutzen 18 dem Extruder in der Hochdruckzone 7 zugeführt. Das Lösungsmittel strömt der Polymerschmelze entgegen, nimmt die zu entfernenden Verunreinigungen auf und wird aus dem Extruder aus der Niederdruckzone 5, über Leitung 14, das Regelventil 15, mit dem der Restdruck mitbestimmt werden kann, und dem Wärmeaustauscher 16 abgeführt. Das Verhältnis Trennmittelmenge - hier Wasser - zum zu reinigenden Polymer beträgt 1:20 bis 1:2, vorzugsweise 1:10 bis 1:5. Mit dem Regelventil 15 wird ein Restdruck (p) entsprechend der Funktion $p_c \geq p \geq 1$ bar absolut eingestellt und aufrechterhalten.

In dem Wärmeaustauscher 16 wird das gegebenenfalls noch dampfförmige Gemisch aus Trenn-(Lösungs-) mittel und extrahierten niedermolekularen Verbindungen verflüssigt und abgekühlt. Dieses Gemisch wird über den Ablauf 17 abgezogen und in einem weiteren Prozeßschritt aufbereitet, wobei die extrahierten Substanzen, zum Beispiel ε-Caprolactam bei Polyamid-6, zurückgewonnen werden und das regenerierte Trennmittel gegebenenfalls dem Extruder erneut zugeführt werden kann.

Die Extraktionszone 6, in der durch eine geeignete Schneckenkonfiguration für einen intensiven Stoffaustausch zwischen Polymerschmelze und Lösungsmittelphase gesorgt wird, wird durch zwei "Schmelzedichtungen" zwischen der Aufschmelzzone 4 und der Niederdruckzone 5 sowie der Hochdruckzone 7 und der letzten Niederdruckzone 9 abgegrenzt. Eine Schmelzedichtung wird durch Stauen der Polymerschmelze erzeugt. Dies kann entweder durch eine geeignete Schneckenkonstruktion bzw. Wahl geeigneter Schneckenelemente oder auch, wie hier, durch eine zweckmäßigerweise verstellbare Drosselvorrichtung 8 erfolgen.

In der abschließenden, letzten Niederdruckzone 9 wird schließlich die Thermovakuumbehandlung durchgeführt, wobei nun von der Polymerschmelze aufgenommenes Trennmittel, hier Wasser und weitgehend die noch verbliebenen Reste an niedermolekularen Verbindungen durch Anlegen eines Vakuums entfernt werden. Auch hier wird eine bessere Schlußentgasung als nach dem Stand der Technik erzielt, weil die Polymerschmelze in der Extraktionszone 6, die unter einem erhöhten Druck steht, sich mit dem Lösungsmittel in höherem Maße belädt und dieses in der letzten Niederdruckzone 9 freigesetzt wird und zum kontrollierten Aufschäumen der Polymerschmelze führt.

Hierdurch wird aufgrund der größeren Stoffaustauschfläche eine weiterreichende Reinigung bewirkt. Die gereinigte Polymerschmelze 24 verläßt den Extruder 1 über den Extruderkopf 11 und wird entweder granuliert oder einem anschließenden Verarbeitungsprozeß, zum Beispiel einem zweiten Aufbereitungsextruder oder einer Spinnvorrichtung direkt zugeführt.

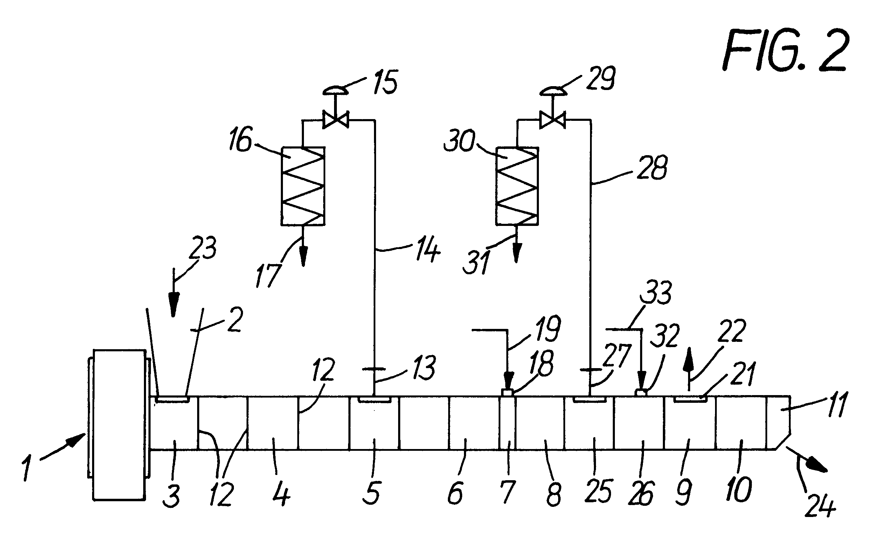

Der Extruder 1 nach Fig 2 weist zwischen der ersten Hochdruckzone 7 und der letzten Niederdruckzone 9 eine zweite Niederdruckzone 25 und eine zweite Hochdruckzone 26 auf. Letzterer ist ein weiterer Einlaßstutzen 32 und eine Druckförderleitung 33 zugeordnet, während die zweite Niederdruckzone 25 einen weiteren Auslaßstutzen 27 aufweist. Von diesem führt eine Förderleitung 28 über ein weiteres Regelventil 29 zu einem weiteren Wärmetauscher 30 mit dem zugeordneten Ablauf 31.

Verfahrenstechnisch verdeutlicht Fig. 2 eine weitere Ausführungsvariante der Erfindung, die sich insbesondere zur Extraktion größerer Mengen Verunreinigungen aus der Polymerschmelze und/oder zur Erzielung einer Tiefstreinigung eignet. So kann zum Beispiel Polyamid-6, das aus einem Polykondensationsreaktor entnommen wird und 8 bis 10 Gew.% ε-Caprolactam enthält, vorteilhaft nach dieser Variante weitestgehend, d.h. auf unter 1000 ppm ε-Caprolactam, entmonomerisiert werden. Als Trennmittel wird hier wiederum Wasser verwendet.

Zwischen der Plastifizierzone 4 und der ersten Niederdruckzone 5 wird wiederum die erste Schmelzedichtung aufgebaut. Über die Wasserdampfförderleitung 19 wird ein Teil des Wassers dem Extruder in der Hochdruckzone 7 zugegeben, strömt in Gegenrichtung, belädt sich mit Nebenkomponenten und wird schließlich aus der ersten Niederdruckzone 5 abgeführt.

Der ersten Extraktionszone 6 folgt eine zweite Extraktionszone, die weitgehend mit der zweiten Niederdruckzone 26 und teilweise mit der zweiten Hochdruckzone zusammenfällt. Die zweite Hochdruckzone ist natürlich gegen die anschließende letzte Niederdruckzone 9 Schmelzedichtung abgegrenzt. Ein weiterer Teil des Wassers wird dem Extruder in der zweiten Hochdruckzone 26 über die weitere Wasserdampfförderleitung 33 zugeführt. In der zweiten Extraktionszone werden die noch verbliebenen Nebenkomponenten extrahiert und mit dem Wasserdampf abgeführt und dem eigenen weiteren Wärmetauscher 30 zugeführt.

Die Schmelzedichtung zwischen der Extraktionszone 6 und der zweiten Niederdruckzone 25 kann auch in vorteilhafterweise so ausgestaltet werden, daß das Trennmittel, das in dem Extruder in der ersten Hochdruckzone 7 zugegeben wird, teilweise auch in Flußrichtung der Polymerschmelze strömt, so daß eine Gegenstromwie auch eine Gleichstrom-Extraktion stattfindet. Dabei kann das Verhältnis der Trennmittelmengen für die Gegenstrom- und Gleichstrom-Extraktion zwischen 1:1 und 20:1 variiert werden.

Die Trennmittel, bzw. Wassermenge für die zweite Extraktionszone ist in der Regel kleiner als die Extraktionsmittelmenge für die erste Extraktionszone 6, wobei sich ein Verhältnis von 1:2 bis 1:10 als besonders günstig erwiesen hat. Das Verhältnis Gesamttrennmittelmenge zum zu reinigenden Polymer beträgt 1:10 bis 1:1, vorzugsweise 1:10 bis 1:2.

Das erfindungsgemäße Reinigungsverfahren für thermoplastische Polymere wurde hier anhand der Fig. 1 und 2 erläutert, wo nur ein Extruder eingesetzt wird. Es ist aber auch im Sinne dieser Erfindung, zum Beispiel zwei hintereinander geschaltete Extruder zu verwenden und den Extraktionsprozeß mit einem weiteren, zum Beispiel einem nachgeschalteten Aufbereitungsschritt zu kombinieren. Das Trennverfahren kann ferner mehrstufig durchgeführt werden, wobei in den einzelnen Extraktionszonen unterschiedliche Verfahrensdrücke eingestellt und/oder unterschiedliche Lösungsmittel, zum Beispiel Wasser und $CO_2$ oder $N_2$, eingesetzt werden. Die Verwendung von zwei Extrudern bietet außerdem die vorteilhafte Möglichkeit, die Schneckendrehzahl an die sich verändernde Konsistenz der Polymerschmelze anzupassen. Insbesondere kann sich das erfindungsgemäße Verfahren auch an einen vorgeschalteten Prozeß, z.B. einen Herstellungsprozeß für Rohkunststoffe oder einen konventionellen Sortier- und/oder Reinigungsprozeß für Kunststoff-Recyclate vorteilhaft anschließen.

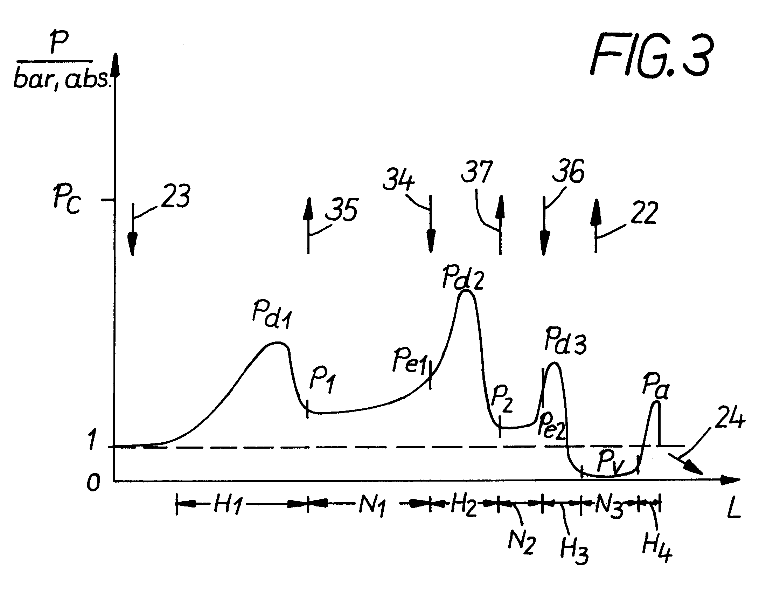

Die Fig. 3 bis Fig. 5 zeigen den Druckverlauf in Extrudern während des Betriebes des erfindungsgemäßen Verfahrens. Dabei ist jeweils das Einleiten des Trennmediums durch Einleitungspfeile 34 und 36, das Ableiten des beladenen Trennmediums durch Ableitungspfeile 35 und 37 symbolisiert.

Der Druckverlauf nach Fig. 3 könnte in dem Extruder nach Fig. 2 vorliegen. In der ersten Schmelzedichtung wird der Druck $p_{d1}$ aufgebaut und so eine erste Hochdruckzone H1 geschaffen. Die zweite und die dritte Schmelzedichtung erzeugen die Drücke $p_{d2}$ und $P_{d3}$ für die zweite Hochdruckzone H2 und die dritte Hochdruckzone H3. Am Ende des Extruders, dessen Länge L die Ordinate bildet, befindet sich eine vierte Hochdruckzone H4, dem Austragsdruck $p_a$ entsprechend.

Die Lage des Zuführungspfeiles 34 verdeutlicht, daß das Trennmedium im ansteigenden Ast der ersten Niederdruckzone N1 bei einem Einleitungsdruck $P_{e1}$ zugeführt wird und sich dem geringsten Widerstand folgend seinen Weg rückwärts sucht und beim Restdruck $p_1$ beladen weitgehend wieder abgeführt wird, wofür der Abführungspfeil 35 steht.

Entsprechendes läuft in der dritten Hochdruckzone H3 und der vorgeschalteten zweiten Niederdruckzone N2 ab, wie aus der Lage des Zuführungspfeiles 36 und des Abführungspfeiles 37 erkennbar ist. Der Einleitungsdruck $p_{e2}$ ist dabei wesentlich geringer, als der Einleitungsdruck $p_{e1}$ wie auch der Restdruck $p_2$ in der zweiten Niederdruckzone N2 niedriger eingestellt ist als davor und nur geringfügig über 1 bar liegt. Die abschließende Vakuumentgasung 22 findet in der dritten Niederdruckzone N3 bei einem Unterdruck $p_v$ statt, der deutlich unter 0,5 bar liegt.

Bei der Rückwärtsextraktion nach Fig. 3 wird also daß Trennmedium im wesentlichen Rückwärts ausgetragen, es werden aber von der Niederdruckzone N1 unter Überwindung der entsprechenden Schmelzedichtung kleinere Mengen an Trennmittel in die folgende zweite Niederdruckzone mitgenommen. Dies gilt auch für den Transport der Schmelze von der zweiten Niederdruckzone N2 nach N3.

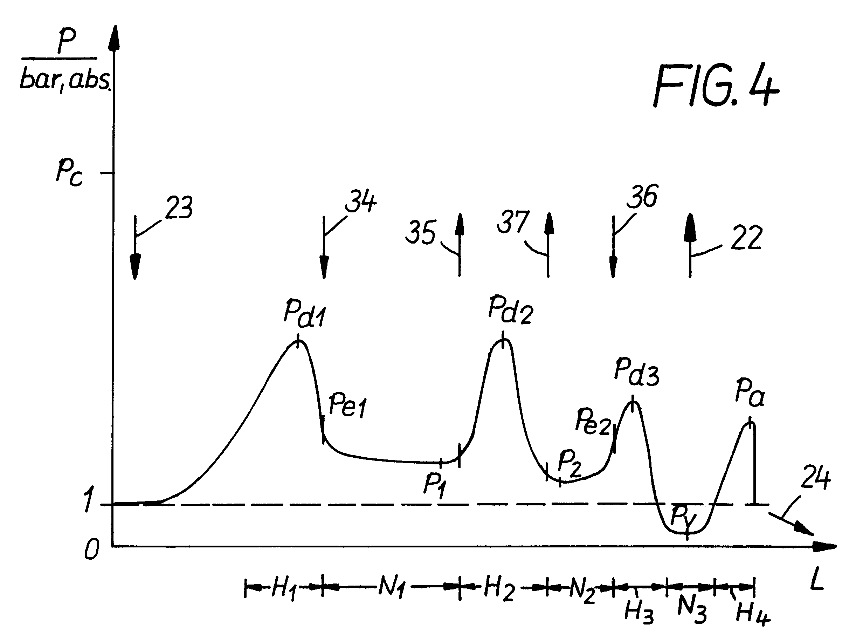

Fig. 4 zeigt die Verfahrensvariante, bei der die zweite Niederdruckzone N2 (wie bei Fig. 1) auf Gegenströmung des Trennmediums eingestellt ist, während in der ersten Niederdruckzone N2 Schmelze und Trennmittel in eine Richtung fließen.

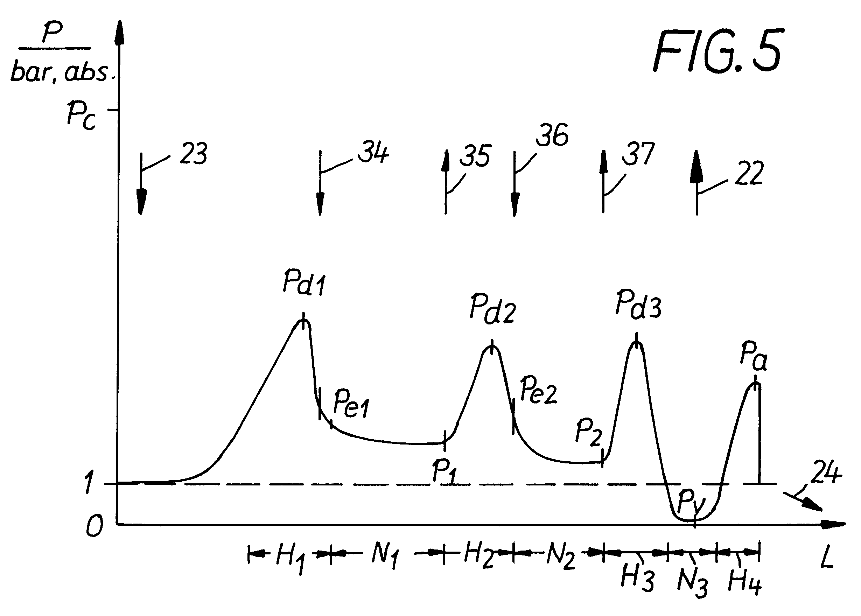

In Fig. 5 ist durch eine entsprechende Anordnung der Einleitungspfeile 34 und 36 sowie der Ableitungspfeile 35 und 37 das Gleichstromprinzip insgesamt beibehalten.

Bei den nachfolgenden Beispielen sind die Beispiele 1 und 2 nicht Gegenstand dieser Erfindung. Sie sollen lediglich die Vorteile des erfindungsgemäßen Verfahrens im Vergleich zum Stand der Technik verdeutlichen.

Beispiel 1: (Stand der Technik)

Ein Polyamid-6-Recyclat (Regranulat) mit einem $\epsilon$-Caprolactamgehalt von 6.400 mg/kg wird in einem Gleichdrall-Zweischnecken-Kneter, Typ ZSK 40, gemäß Fig. 2 behandelt, wobei die Niederdruckzonen 5 und 25 als Thermovakuumbehandlungszonen mit Vakuumentgasung betrieben werden. Trenn- oder Schleppmittel werden nicht zugegeben. Die so gereinigte Polymerschmelze wird anschließend stranggranuliert und auf $\epsilon$-Caprolactam analysiert. Bei einem Durchsatz von 55 kg/h und einem Vakuum von 5 mbar über der ersten Niederdruckzone 5 und 4 mbar über der zweiten Niederdruckzone 25 wird der $\epsilon$-Caprolactamgehalt auf 1.590 mg/kg, entsprechend einem Entlactamisierungsgrad von 75 %, reduziert. Bei dieser Verfahrensweise neigt das $\epsilon$-Caprolactam dazu, sich in den Leitungen zu dem Evakuiersystem niederzuschlagen und zu erheblichen technischen Schwierigkeiten zu führen, die nur mit großem Aufwand überwunden werden können.

Beispiel 2: (Stand der Technik)

Das gleiche Ausgangsmaterial wie in Beispiel 1 wird unter Einsatz von Wasser als Schleppmittel, aber sonst bei vergleichbaren Verfahrensparametern wie in Beispiel 1, entgast. Über die Wasserdampfförderleitungen 19 und 33 werden je 0,85 kg/h Wasser in die Kunststoffschmelze eingegeben. Das Vakuum beträgt 9 mbar über der ersten Niederdruckzone 5 und 8 mbar über der zweiten und der letzten Niederdruckzone 25 bzw 9. Der $\epsilon$-Caprolactamgehalt wird dabei auf 770 mg/kg, entsprechend einem Entlactamisierungsgrad von 88 %, reduziert. Aufgrund der bereits erwähnten Neigung von $\epsilon$-Caprolactam, sich auf den Wänden der Leitungen zu dem Evakuiersystem abzusetzen, kann ein störungsfreier Betrieb auch hier nur unter großem Aufwand gewährleistet werden.

Beispiel 3: (gemäß der Erfindung)

Ein Polyamid-6-Recyclat (Regranulat) mit einem $\epsilon$-Caprolactamgehalt von 6.400 mg/kg wird in einem Gleichdrall-Zweischnecken-Kneter, Typ ZSK 40, gemäß Fig. 1 durch Lösungsmittelextraktion gereinigt. Bei einem Durchsatz von 20 kg/h werden über die Wasserdampfförderleitung19 4 kg/h Wasser dem Extruder in der Hochdruckzone 7 bei einem Druck von 12 bar absolut zugeführt. Mit Hilfe der Drosselvorrichtung 8 wird eine Schmelzedichtung aufgebaut, so daß das zugegebene Wasser größtenteils der Polymerschmelze entgegenströmt, sich dabei zunehmend mit den zu extrahierenden Verunreinigungen belädt und aus dem Extruder aus der Niederdruckzone 5 bei einem Druck von 4 bar absolut abgeführt wird. Ein kleiner Teil des zugegebenen Wassers wird von der Polymerschmelze aufgenommen und mit den verbliebenen Verunreinigungen in der letzten Niederdruckzone 9 bei einem Vakuum von 1 mbar entfernt. Die gereinigte Polymerschmelze 24 wird anschließend stranggranuliert und auf $\epsilon$-Caprolactam analysiert. Der $\epsilon$-Caprolactamgehalt wird dabei auf 330 mg/kg, entsprechend einem Entlactamisierungsgrad von 95 %, reduziert.

Beispiel 4: (gemäß der Erfindung)

Ein Polyamid-6-Recyclat (Regranulat) mit einem $\epsilon$-Caprolactamgehalt von 6.400 mg/kg wird in einem Gleichdrall-Zweischnecken-Kneter, Typ ZSK 40, gemäß Fig. 1 durch Lösungsmittelextraktion gereinigt.

Bei einem Durchsatz von 20 kg/h werden 2 kg/h Wasser und 2,1 kg/h Kohlendioxid dem Extruder in der Hochdruckzone 7 bei einem Druck von 65 bar absolut zugeführt. Das zugegebene Trennmittel strömt größtenteils der Polymerschmelze entgegen, belädt sich dabei zunehmend mit den zu extrahierenden Verunreinigungen und wird aus dem Extruder aus der Niederdruckzone 5 bei einem Druck von 6 bar absolut abgeführt. Ein Teil des zugegebenen Lösungsmittelgemisches wird von der Polymerschmelze aufgenommen und mit den verbliebenen Verunreinigungen in der anschließenden letzten Niederdruckzone 9 bei einem Vakuum von 12 mbar entfernt. Die gereinigte Polymerschmelze 24 wird anschließend stranggranuliert und auf $\epsilon$-Caprolactam analysiert. Der $\epsilon$-Caprolactamgehalt wird dabei auf 590 mg/kg, entsprechend einem Entlactamisierungsgrad von 91 %, reduziert.

Beispiel 5: (gemäß der Erfindung)

Ein Rohpolyamid-6 mit einem $\epsilon$-Caprolactamgehalt von 9,3 Gew.% wird in einem Gleichdrall-Zweischnecken-Kneter, Typ ZSK 40, gemäß Fig. 2 durch Lösungsmittelextraktion mit Wasser gereinigt. Bei einem Durchsatz von 22 kg/h an Stoffgemisch werden über die Wasserdampfförderleitung 19 8 kg/h Wasserdampf dem Extruder mit einem Druck von 4 bar absolut zugeführt und weitgehend aus der ersten Niederdruckzone 5 bei einem Druck von 3 bar absolut abgeführt. Der ersten Extraktion folgt eine zweite Extraktion. Dabei wird über die Wasserdampfförderleitung 33 dem Extruder bei einem Druck von 2 bar abs. Wasser zugeführt worauf das zugegebene Wasser der Polyamidschmelze entgegenströmt, sich dabei zunehmend mit den zu extrahierenden Restverunreinigungen belädt und aus der zweiten Niederdruckzone 25 bei atmosphärischem Druck abgeführt wird. Ein Teil des zugegebenen Wassers wird von der Polymerschmelze aufgenommen und mit den eventuell verbliebenen geringen Mengen an Verunreinigungen in der anschließenden letzten Niederdruckzone 9 bei einem Vakuum von 1 mbar entfernt. Die gereinigte Polymerschmelze 24 wird anschließend stranggranuliert und auf $\epsilon$-Caprolactam analysiert. Der $\epsilon$-Caprolactamgehalt konnte auf 640 mg/kg, entsprechend einem Entlactamisierungsgrad von 99,3 %, reduziert werden.

Bei den erfindungsgemäßen Beispielen 3 bis 5 bleibt das extrahierte Caprolactam stets in der wässrigen Phase gelöst und führt nicht zur Verstopfung von Rohrleitungen. Damit ist eine störungsfreie, betriebssichere kontinuierliche Fahrweise gewährleistet.

Beispiel 6 (gemäß der Erfindung)

Bezüglich der Ausübung des erfindungsgemäßen Verfahrens mit einem gasförmigen Trennmedium sei darauf verwiesen, daß aus PET (Polyäthylentherephthalat) mit dem Trennmedium $CO_2$ die Nebenkomponente Acetaldehyd abgetrennt und auf 1 ppm Restgehalte an Acetaldehyd gebracht werden konnte.

**Patentansprüche**

1. Verfahren zur Trennung eines aus mehreren Komponenten bestehenden Stoffgemisches, das als Hauptkomponente thermoplastische Polymere und als abzutrennende Nebenkomponenten niedermolekulare Verbindungen enthält durch Thermovakuumbehandlung einer Schmelze des Stoffgemisches in einem Extruder mit mehreren Hoch- und Niederdruckzonen, wobei in eine der der letzten Niederdruckzone vorgeschalteten Hochdruckzonen unter dem Einleitungsdruck ($p_e$) ein Trennmedium, in dem die niedermolekulare Verbindung zumindest teilweise lösbar ist, in die Schmelze eingeleitet und zum Teil aus einer dieser Hochdruckzone benachbarten Niederdruckzone, in der ein gegenüber dem Einleitungsdruck ($p_e$) geringerer Restdruck (p) herrscht als mit Nebenkomponenten beladenes Trennmedium abgeführt und außerhalb des Extruders aufgefangen wird, **dadurch gekennzeichnet,** daß die Schmelze auf ihrem Weg durch den Extruder zunächst eine Niederdruckzone mit einem Restdruck (p) durchläuft, der der Bedingung

$$1 \text{ bar} \leq p \leq p_c$$

(wobei $p_c$ der kritische Druck des Trennmediums ist) genügt, und aus der mit Nebenkomponenten beladenes Trennmedium abgeführt wird, bevor die Thermovakuumbehandlung der Schmelze durch Vakuumentgasen bei einem Unterdruck ($p_u$) < 0,5 bar, vorzugsweise < 0,05 bar in der letzten Niederdruckzone erfolgt.

2. Verfahren nach Anspruch 1,
**dadurch gekennzeichnet,**
daß der überwiegende Teil des in eine Hochdruckzone eingeleiteten mit Nebenkomponenten beladenen Trennmediums gegenströmend geführt und aus der dieser Hochdruckzone vorgeschalteten Niederdruckzone abgeführt wird.

3. Verfahren nach einem der Ansprüche 1 und 2,
**dadurch gekennzeichnet,**
daß die Thermovakuumbehandlung erst durchgeführt wird, nachdem der Gehalt an niedermolekularen Verbindungen auf ≤ 10 % des Ausgangsgehaltes des Stoffgemisches an niedermolekularen Verbindungen abgesenkt worden ist.

4. Verfahren nach einem der Ansprüche 1 bis 3,
**dadurch gekennzeichnet,**
daß der Restdruck (p) zwischen 1 und 8 bar liegt und die Einleitung des Trennmediums unter einem Druck ($p_e$) erfolgt der in dem durch die Funktion

$$p < p_e < p_c$$

gegebenen Bereich liegt.

5. Verfahren nach einem der Ansprüche 1 bis 4, bei dem die Schmelze zwei Hochdruckzonen durchläuft, in denen Trennmedium unter Druck eingeleitet wird,
**dadurch gekennzeichnet,**
daß beide Hochdruckzonen zum Zonenbereich mit vorwiegender Rückwärtsströmung gehören, daß vor beiden Hochdruckzonen eine Niederdruckzone, in der der definierte Restdruck (p) herrscht, liegt, und daß aus beiden Niederdruckzonen beladenes Trennmittel abgeleitet wird.

6. Verfahren nach einem der Ansprüche 1 bis 5,
**dadurch gekennzeichnet,**
daß die an die Lösungsmittelextraktion unmittelbar anschließende Ableitung des beladenen Trennmediums aus der entsprechenden Niederdruckzone bei einem Förderdruck ($p_f$) erfolgt, der der Bedingung für den Restdruck (p) genügt.

7. Verfahren nach einem der Ansprüche 1 bis 6,
**dadurch gekennzeichnet,**
daß als Trennmedium Wasser verwendet wird.

8. Verfahren nach einem der Ansprüche 1 bis 6,
**dadurch gekennzeichnet,**
daß als Trennmedium $CO_2$ oder $N_2$ verwendet wird.

9. Verfahren nach einem der Ansprüche 1 bis 6,
**dadurch gekennzeichnet,**
daß als Trennmedium ein Gemisch aus einem bei 20 °C und 1 bar abs. flüssigen Lösungsmittel und $CO_2$ oder $N_2$ verwendet wird.

10. Anwendung des Verfahrens nach einem der Ansprüche 1 bis 9 zur Abtrennung niedermolekularer Verbindungen im Zuge der Aufbereitung von Recyclat-Kunststoff und Recyclat-Kunststoffgemischen.

11. Anwendung des Verfahrens nach einem der Ansprüche 1 bis 9 zur Thermovakuumbehandlung eines Rohkunststoffes als Stoffgemisch.

12. Anwendung des Verfahrens nach einem der Ansprüche 1 bis 9 auf ein Stoffgemisch mit der Hauptkomponente Polyamid 6 und der Nebenkomponente ε-Caprolactam.

13. Anwendung des Verfahrens nach einem der Ansprüche 1 bis 6 für den Zweck nach Anspruch 10 und/oder 11 und/oder 12, unter Verwendung von Wasser als Trennmedium, das als Wasserdampf in die Schmelze eingeleitet wird, mit der Maßgabe, daß mindestens 200 % Wasser, bezogen auf den anfänglichen Massegehalt des Substrats an Nebenkomponenten eingeleitet werden.

14. Anwendung des Verfahrens nach den Ansprüchen 4 bis 6 für den Zweck nach Anspruch 10 und/oder 11 und/oder 12, mit der Maßgabe, daß in die erste Hochdruckzone mehr als 50 Masse %, in die, der abschließenden Thermovakuumbehandlung näher liegende zweite Hochdruckzone weniger als 50 Masse % des Wassers eingeleitet werden, daß der Restdruck ($p_1$) in der der ersten Hochdruckzone vorgeschalteten Niederdruckzone höher ist als der Restdruck ($p_2$) in der zweiten Niederdruckzone, und daß die Differenz ($p_2$ - $p_1$) der Restdrücke mindestens 1 bar beträgt.

FIG.1

EP 0 639 445 A2

FIG. 2

FIG.3

FIG.4

FIG.5